# EUROPÄISCHE PATENTSCHRIFT

(11) **EP 1 035 672 B1**
(45) Veröffentlichungstag und Bekanntmachung des Hinweises auf die Patenterteilung: **18.05.2005**
(21) Anmeldenummer: 00104816.4
(22) Anmeldetag: 06.03.2000
(51) Int. Cl.: H04B 10/213, H04B 10/08

(54) **Transparentes faseroptisches Kommunikationsnetz**
Transparent optical communication network
Réseau transparent de communication optique

(30) Priorität: 10.03.1999 DE 19910646
(43) Veröffentlichungstag der Anmeldung: 13.09.2000
(73) Patentinhaber: SIEMENS AKTIENGESELLSCHAFT, 80333 München (DE)
(72) Erfinder: Johannsen, Reinhard, Dr., 82024 Taufkirchen (DE); Asch, Stefan, 82178 Puchheim (DE); Jäger, Hubert, Dr., 82049 Pullach (DE)

(56) Entgegenhaltungen:
- EP-A- 0 837 572
- DE-A- 19 538 755

## Beschreibung

Beim im Auf- bzw. Ausbau befindlichen rein optischen Kommunikationsnetzen, insbesondere bei Metropolen-Ring-Kommunikationsnetzen sind die für die Verbindung der benachbarten Netzknoten untereinander zur Verfügung stehenden optischen Fasern zwischen zwei benachbarten Netzknoten häufig nicht vollständig belegt, d.h. eine Mehrfachnutzung der einzelnen optischen Fasern unter Einsatz der Wellenlängenmultiplex-Technik (Wavelength Division Multiplexing = WDM) ist in einem derartigen Ausbaustadium bzw. bei einer derartig geringen Nutzung der vorhandenen Faserkapazitäten des optischen Kommunikationsnetzes noch nicht erforderlich.

Bei herkömmlichen, bekannten Netzarchitekturen besteht die Möglichkeit exklusiv für einen Netzkunden eine unbenutzte, mehrere Netzknoten miteinander verbindende, optische Faser ausschließlich vorzusehen, über diese der Netzkunde Daten aus dem faseroptischen Kommunikationsnetz beziehen oder zum faseroptischen Kommunikationsnetz übertragen kann. Derartige unmittelbar für einen Netzkunden reservierte optische Fasern sind in der Fachwelt unter der Bezeichnung "Dark Fibers" ("dunkle Faser") bekannt, wobei durch die Bezeichnung "Dark Fibers" die Tatsache umschrieben wird, daß das in der optischen Faser im faseroptischen Kommunikationsnetz übertragene, optische Signal ausschließlich durch den Laser des Netzkunden erzeugt wird und keinesfalls das im Netzknoten empfangene optische Signal durch den Netzbetreiber gewandelt und erneut beispielsweise mit einer anderen Wellenlänge ausgesandt wird.

Jedoch ist bei derartigen Netzarchitekturen die Möglichkeit der Bereitstellung einer "Dark Fiber" nur als zusätzliche Möglichkeit zu der primären Datenübertragung mit Hilfe der WDM-Technik vorgesehen, d.h. üblicherweise werden optische Zuleitungsfasern eines Netzkunden an einem im Netzknoten befindlichen WDM-Multiplexer, mit dessen Hilfe die über mehrere Zuleitungsfasern im Netzknoten empfangenen, optischen Signale auf eine gemeinsame die einzelnen Netzknoten verbindende, optische Faser gemultiplext werden, geführt - siehe hierzu insbesondere "A Cost Effective Approach to Introduce an Optical WDM Network in the Metropolitan Environment", S. Johansson et. al., IEEE Journal on Selected Areas in Communications, vol. 16, no.7, September 1998, S. 1109-1121. Allerdings ist bei einem Anschluß eines Netzkunden über derartige "Dark Fibers" keine Überwachung der Übertragungsqualität sowie die beispielsweise für eine Gebührenerhebung seitens des Netzbetreibers benötigte Erfassung der übertragenen Datenraten möglich. Auch für das Auftreten einer Funktionsstörung der "Dark Fibers" wurden bei bekannten Kommunikationsnetzen keine Schutzmaßnahmen beispielsweise eine Alarmierung des jeweiligen optischen Netzknotens vorgesehen, durch die eine schnelle und zuverlässige Fehlerlokalisation ermöglicht würde. Des Weiteren sind bisher auch keine Schutzschaltungen für "Dark Fibers" bekannt, durch die beim Auftreten eines Faserbruches der aktiven optischen "Dark Fiber" auf die redundante optische "Dark Fiber" umgeschaltet werden könnte. Aufgrund dieser fehlenden Servicemöglichkeiten wird seitens des Netzbetreibers nur äußerst wenigen Netzkunden der Netzanschluß über eine "Dark Fiber" ermöglicht.

Des Weiteren ist es aus Sicht des Netzbetreibers wünschenswert für die optimale Ausnutzung der üblicherweise vorhandenen Faserkapazitäten - beispielsweise etwa bis zu 100 optische Ring-Fasern - und insbesondere für den Ausbau eines bestehenden, volloptischen Kommunikationsnetzes zunächst das volloptische Kommunikationsnetz ohne Zuhilfenahme der WDM-Technik betreiben zu können und im Laufe des Netzausbaus eine stufenweise Einführung der WDM-Technik zu ermöglichen, d.h. das fasergebundene Kommunikationsnetz modular aufbauen zu können.

Die der Erfindung zugrundeliegende Aufgabe besteht nun darin, den Anschluß von Netzkunden an die die Netzknoten des faseroptischen Kommunikationsnetzes verbindenden optischen Fasern hinsichtlich der Überwachung der optischen Fasern bzw. optischen Zuleitungsfasern, der Regeneration der optischen Signale und der Zuverlässigkeit der über die optischen Fasern bzw. optischen Zuleitungsfasern geschalteten Verbindungen zu verbessern und somit einen stufenweisen Ausbau des volloptischen Kommunikationsnetzes zunächst ohne Einsatz der WDM-Technik zu ermöglichen. Die Aufgabe wird ausgehend von einem Verfahren gemäß den Merkmalen des Oberbegriffs des Patentanspruches 1 durch die Merkmale des kennzeichnenden Teils gelöst.

Der wesentliche Aspekt des erfindungsgemäßen transparenten faseroptischen Kommunikationsnetzes mit mehreren über optische Fasern miteinander verbundenen, zentralen Einrichtungen, an die jeweils über zwei optische Zuleitungsfasern zumindest eine dezentrale Einrichtung angeschlossen ist, ist darin zu sehen, daß eine erste optische Faser über eine Überwachungseinrichtung optisch transparent durch eine erste optische Zuleitungsfaser mit einer der dezentralen optischen Einrichtungen verbunden ist und daß eine zweite optische Faser über die Überwachungseinrichtung optisch transparent durch eine zweite optische Zuleitungsfaser mit der einen dezentralen optischen Einrichtung verbunden ist. Vorteilhaft werden beim erfindungsgemäßen transparenten, faseroptischen Kommunikationsnetz die Zuleitungsfasern einer dezentralen Einrichtung - beispielsweise die Kommunikationseinrichtung eines Netzkunden - über eine Überwachungseinrichtung an die die zentralen optischen Einrichtungen verbindenden, noch unbenutzten optischen Fasern geführt. Dadurch kann die kostenintensive und beim Aufbau eines Kommunikationsnetzes teilweise ineffiziente Bereitstellung einer WDM-Multiplexereinrichtung in der zentralen Einrichtung eingespart werden, zumal eine Mehrfachnutzung der einzelnen, optischen Fasern mit Hilfe der WDM-Technik einen hohen technischen Aufwand darstellt, der durch die beim Auf- bzw. Ausbau des Kommunikationsnetzes üblicherweise geringen Auslastung des Kommunikationsnetzes nicht erforderlich ist. Des Weiteren wird besonders vorteilhaft mit Hilfe der erfindungsgemäßen Überwachungseinrichtung ein zuverlässiger und sicherer Betrieb sowohl der optischen Zuleitungsfasern und der optischen Ring-Fasern sichergestellt und somit beim Auftreten einer Funktionsstörung der optischen Fasern bzw. optischen Zuleitungsfasern eine schnelle und zuverlässige Fehlerlokalisation ermöglicht. Zusätzlich ist durch den modularen Aufbau des erfindungsgemäßen Kommunikationsnetzes eine bei zunehmender Auslastung des Kommunikationsnetzes erforderliche Erweiterung des Kommunikationsnetzes bzw. des jeweiligen optischen Netzknoten durch eine WDM-Multiplexereinrichtung zur Mehrfachnutzung der einzelnen optischen Fasern möglich.

Nach einer weiteren Ausgestaltung des erfindungsmäßen Verfahrens ist die erste optische Faser zusätzlich zur Überwachungseinrichtung über eine Regenerationseinrichtung optisch transparent durch die erste optische Zuleitungsfaser mit der dezentralen optischen Einrichtung verbunden und die zweite optische Faser zusätzlich zur Überwachungseinrichtung durch eine Regenerationseinrichtung optisch transparent über die zweite Zuleitungsfaser mit der einen dezentralen Einrichtung verbunden - Anspruch 2, wobei die Regenerationseinrichtung zur Wiederherstellung des ursprünglichen Sendepegels der über die optischen Zuleitungsfasern und/oder über die optischen Fasern übertragenen optischen Signale vorgesehen ist - Anspruch 5. Durch die Regenerationseinrichtung werden somit auf vorteilhafte Weise die im Netzknoten empfangenen optischen Signale nicht nur durch die Überwachungseinrichtung überwacht, sondern auch regeneriert, d.h. das ursprüngliche optische Signal wird beispielsweise bezüglich seines Sendepegels teilweise bzw. komplett wiederhergestellt und kann dadurch zuverlässiger übertragen werden. Hierdurch wird vorteilhaft die durch zu schwache optische Signalpegel erzeugte Anzahl von Übertragungsfehler verringert.

Ein Vorteil von in den Unteransprüchen definierten Ausgestaltungen der Erfindung besteht unter anderem darin, daß die Überwachungseinrichtung zur Überwachung der Datenrate der zwischen der dezentralen und der zentralen optischen Einrichtung aktuell übertragenen Daten vorgesehen ist - Anspruch 4. Vorteilhaft kann durch die erfindungsgemäße Überwachungseinrichtung die vom Netzkunden für die Übertragung seiner Daten ins und aus dem faseroptischen Kommunikationsnetz benutzte Datenrate überwacht werden und damit können die für die Benutzung des faseroptischen Kommunikationsnetzes anfallenden Kosten dem Netzkunden durch den Netzbetreiber transparent angezeigt werden.

Weitere vorteilhafte Ausgestaltungen des erfindungsgemäßen transparenten faseroptischen Kommunikationsnetzes sind den weiteren Ansprüchen zu entnehmen.

Im folgenden wird das erfindungsgemäße Verfahren anhand von zwei Prinzipschaltbildern näher erläutert.
- Figur 1: zeigt in einem Prinzipschaltbild das erfindungsgemäße transparente, faseroptische Kommunikationsnetz und
- Figur 2: zeigt beispielhaft in einem weiteren Prinzipschaltbild den Anschluß zweier Kommunikationseinrichtungen eines Netzkunden an einen optischen Netzknoten des erfindungsgemäßen transparenten, faseroptischen Kommunikationsnetzes.

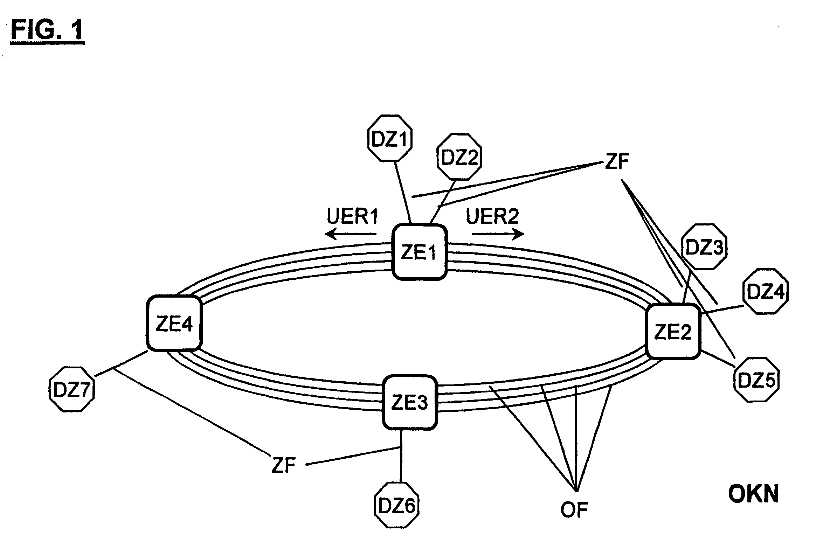

In Figur 1 ist ein erfindungsgemäßes transparentes, faseroptisches Kommunikationsnetz OKN, beispielsweise ein eine Ringnetz-Topologie aufweisendes Kommunikationsnetz OKN schematisch dargestellt, wobei beispielhaft für eine Vielzahl von möglichen zentralen optischen Einrichtungen bzw. optischen Netzknoten ZE ein erster, zweiter, dritter und vierter optischer Netzknoten ZE1-ZE4 dargestellt sind. Die einzelnen optischen Netzknoten sind jeweils mit den jeweiligen Nachbarknoten über optische Fasern OF miteinander verbunden, d.h. der erste ZE1 ist mit dem zweiten ZE2, der zweite ZE2 mit dem dritten ZE3, der dritte ZE3 mit dem vierten ZE4 und der vierte ZE4 mit dem ersten ZE1 optischen Netzknoten jeweils über optische Fasern verbunden und resultieren somit in einem eine Ringnetz-Topologie aufweisenden transparenten, faseroptischen Kommunikationsnetz OKN. Beispielshaft sind in Figur 1 vier einer Vielzahl von optischen Fasern OF dargestellt. Des Weiteren werden die optischen Fasern OF in einem unidirektionalen Betriebsmodus betrieben, wobei eine Übertragung von optischen Signalen os über die optischen Fasern OF sowohl in einer ersten Übertragungsrichtung UE1 als auch in einer entgegengesetzt zur ersten, zweiten Übertragungsrichtung UE2 möglich ist, d.h. jeder optischen Faser OF wird eine erste oder zweite Übertragungsrichtung UER1/2 anwendungsorientiert zugeordnet.

Zusätzlich sind in Figur 1 beispielhaft für eine Vielzahl von möglichen dezentralen optischen Einrichtungen bzw. den optischen Kommunikationseinrichtungen eines Netzkunden DZ eine erste, zweite, dritte, vierte, fünfte, sechste und siebte dezentrale optische Einrichtung DZ1-DZ7 dargestellt, wobei an den ersten optischen Netzknoten ZE1 die erste und zweite dezentrale Einrichtung DZ1, DZ2, an den zweiten optischen Netzknoten ZE2 die dritte, vierte und fünfte dezentrale optische Einrichtung DZ3, DZ4, DZ5, an den dritten optischen Netzknoten ZE3 die sechste dezentrale optische Einrichtung DZ6 und an den vierten optischen Netzknoten ZE4 die siebte dezentrale optische Einrichtung DZ7 jeweils durch optische Zuleitungsfasern ZF angeschlossen sind.

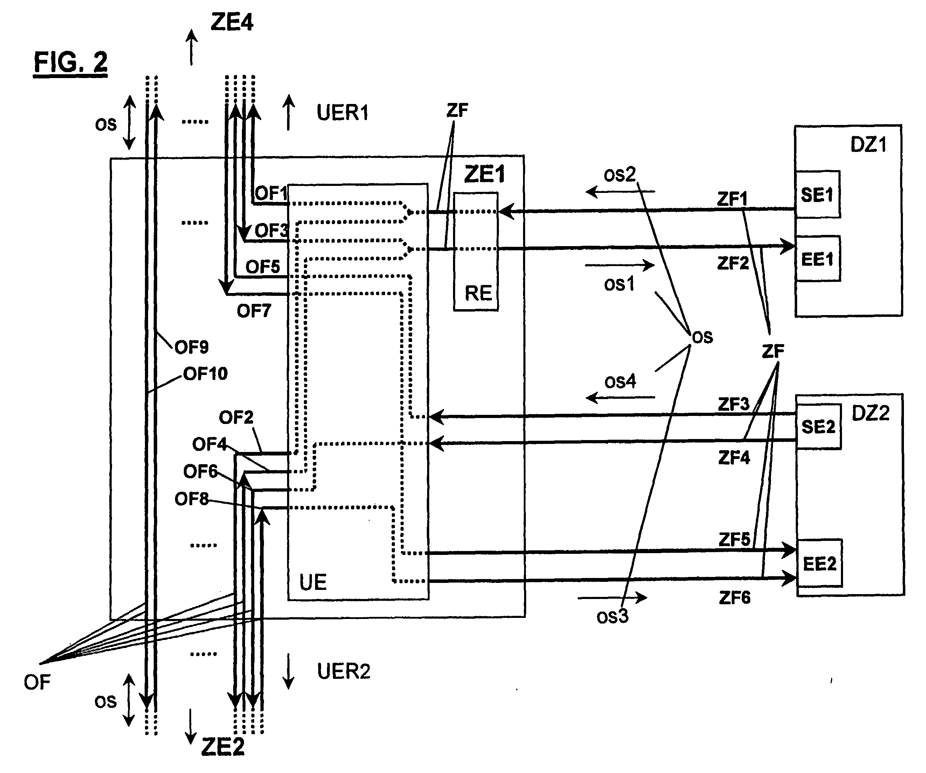

In Figur 2 ist der erste optische Netzknoten ZE1 und die an diesen über optische Zuleitungsfasern ZF angeschlossene erste und zweite dezentrale optische Einrichtung dargestellt, wobei in der ersten optischen dezentralen Einrichtung DZ1 eine erste optische Empfangseinheit EE1 zum Empfang von optischen Signalen os und eine erste optische Sendeeinrichtung SE1 zum Senden von optischen Signalen os vorgesehen ist. Analog dazu sind in der zweiten dezentralen optischen Einrichtung DZ2 eine zweite optische Empfangseinheit EE2 zum Empfang von optischen Signalen os und eine zweite optische Sendeeinrichtung SE2 zum Senden von optischen Signalen os vorgesehen.

Der erste optische Netzknoten ZE1 weist erfindungsgemäß eine Überwachungseinheit UE zur Überwachung des Betriebszustands der optischen Zuleitungsfasern ZF1-ZF6 und/oder der an die optische Überwachungseinrichtung UE geführten optischen Fasern OF und zur Überwachung der Datenrate der zwischen der ersten und zweiten dezentralen und der ersten zentralen optischen Einrichtung DZ1/2, ZE1 aktuell übertragenen Daten auf. Des Weiteren ist im ersten optischen Netzknoten ZE1 eine Regenerationseinheit RE zur Wiederherstellung des ursprünglichen Sendepegels der über die optischen Zuleitungsfasern ZF und/oder über die optischen Fasern OZ übertragenen optischen Signale os vorgesehen, wobei in Figur 2 beispielsweise die Regenerationseinheit RE über optische Zuleitungsfasern ZF an die Überwachungseinrichtung UE angeschlossen ist und die erste optische Zuleitungsfaser ZF1 und die zweite optische Zuleitungsfaser ZF2 an die Regenerationseinrichtung RE geführt sind. Des Weiteren kann zusätzlich mit Hilfe der Regenerationseinrichtung RE beispielsweise eine Regeneration der übertragenen Signalimpulse ("pulse shaping") und/oder eine Rückgewinnung des Signaltaktes ("retiming") durchgeführt werden. Bei einer weiteren, nicht in Figur 2 dargestellten Ausgestaltung des erfindungsgemäßen Kommunikationsnetzes werden beispielsweise an die Regenerationseinheit RE direkt die optischen Fasern OF geführt und die Regenerationseinrichtung RE wiederum über optische Zuleitungsfasern ZF an die Überwachungseinrichtung angeschlossen. Beispielhaft sind in Figur 2 eine erste, zweite, dritte, vierte, fünfte, sechste, siebte, achte, neunte und zehnte von einer Vielzahl von optischen Fasern OF1-OF10 dargestellt, die an den ersten optischen Netzknoten ZE1 angeschlossen sind. Hierbei werden beispielsweise die neunte und die zehnte optische Faser OF9, OF10 über den ersten optischen Netzknoten ZE1 geführt, d.h. an die neunte und zehnte optische Faser OF9, OF10 wird im ersten optischen Netzknoten ZE1 keine dezentrale optische Einrichtung DZ angeschlossen. Die erste, dritte, fünfte und siebte optische Faser OF1, OF3, OF5, OF7 verbinden den vierten Netzknoten ZE4 mit dem ersten Netzknoten ZE1 und werden im ersten Netzknoten ZE1 beispielsweise direkt an die Überwachungseinrichtung UE geführt. Analog dazu ist der erste optische Netzknoten ZE1 über die zweite, vierte, sechste und achte optische Faser OF2, OF4, OF6, OF8 mit dem zweiten optischen Netzknoten verbunden, die wiederum im ersten optischen Netzknoten ZE1 beispielsweise direkt an die Überwachungseinrichtung UE geführt werden.

Des Weiteren ist in Figur 2 die für die Übertragung der optischen Signale os in Richtung vom ersten zum vierten optischen Netzknoten ZE1, ZE4 vorgesehene, erste optische Übertragungsrichtung UER1 und die für die Übertragung der optischen Signale os in Richtung von der ersten zum zweiten optischen Netzknoten ZE1, ZE2 vorgesehene, zweite optische Übertragungsrichtung UER2 angedeutet, wobei die erste, vierte, fünfte, achte und neunte optische Faser OF1, OF4, OF5, OF9 in erster Übertragungsrichtung UER1 und die zweite, dritte, sechste, siebte und zehnte optische Faser OF2, OF3, OF6, OF7, OF10 in zweiter Übertragungsrichtung UER2 unidirektional betrieben werden.

Die erste dezentrale optische Einrichtung DZ1 ist durch die erste und die zweite optische Zuleitungsfaser ZF1, ZF2 mit dem ersten Netzknoten ZE1 verbunden, wobei über die erste optische Zuleitungsfaser ZF1 optische Signale os von der Sendeeinheit SE1 der ersten dezentralen optischen Einrichtung DZ1 zur Regenerationseinrichtung RE des ersten Netzknoten ZE1 und über die zweite optische Zuleitungsfaser ZF2 optische Signale os von der Regenerationseinrichtung RE des ersten optischen Netzknoten ZE1 an die erste Empfangseinheit EE1 der ersten dezentralen optischen Einrichtung DZ1 übertragen werden.

Im Gegensatz dazu ist die zweite dezentrale optische Einrichtung DZ2 über eine dritte, vierte, fünfte und sechste optische Zuleitungsfaser ZF3, ZF4, ZF5, ZF6 mit dem ersten optischen Netzknoten ZE1 bzw. mit der Überwachungseinrichtung UE des ersten optischen Netzknoten ZE1 verbunden, d.h. für den Anschluß der zweiten dezentralen optischen Einrichtung DZ2 an den ersten optischen Netzknoten ZE1 ist zusätzlich ein 1+1 Leitungsschutz vorgesehen. Hierzu werden über die dritte und vierte optische Zuleitungsfaser ZF3, ZF4 dieselben optischen Signale os annähernd gleichzeitig von der zweiten Sendeeinheit SE2 der zweiten dezentralen optischen Einrichtung DZ2 zur Überwachungseinrichtung des ersten optischen Netzknoten ZE1 und über die fünfte und sechste optische Zuleitungsfaser ZF5, ZF6 dieselben optischen Signale os annähernd gleichzeitig von der Überwachungseinrichtung des ersten optischen Netzknoten ZE1 zur Empfangseinheit EE2 der zweiten dezentralen optischen Einrichtung DZ2 übertragen, d.h. die vierte und fünfte optische Zuleitungsfaser ZF4, ZF5 werden in einem redundanten Betriebsmodus betrieben.

Ein über die dritte optische Faser OF3 in zweiter Übertragungsrichtung UER2 zum ersten optischen Netzknoten ZE1 übertragenes erstes optisches Signal osl wird im ersten optischen Netzknoten ZE1 an die Überwachungseinrichtung UE geführt und dort bzgl. des über die vierte optische Faser OF4 in erster Übertragungsrichtung UER1 zum ersten optischen Netzknoten ZE1 redundant übertragenen ersten optischen Signal osl überwacht, d.h. es wird anhand der erhaltenen ersten optischen Signalen osl der Betriebszustand der dritten und der vierten optischen Faser OF3, OF4 überprüft. Anschließend werden das erste optische Signal osl über die eine optische Zuleitungsfaser ZF an die Regenerationseinheit RE geführt. In der Regenerationseinheit RE wird der ursprüngliche optische Signalpegel des empfangenen ersten optischen Signals osl regeneriert und anschließend über die zweite optische Zuleitungsfaser ZF2 zur ersten Empfangseinheit EE1 der ersten dezentralen optischen Einrichtung DZ1 übertragen. Das in der ersten Empfangseinheit EE1 der ersten, dezentralen optischen Einrichtung DZ1 empfangene erste optische Signal osl wird anschließend in der ersten, dezentralen optischen Einrichtung DZ1 weiterverarbeitet.

Das von der ersten optischen Sendeeinheit SE1 erzeugte, zweite optische Signal os2 wird von der ersten dezentralen, optischen Einrichtung DZ1 über die erste optische Zuleitungsfaser ZF1 zur Regenerationseinheit RE des ersten optischen Netzknoten ZE1 übertragen. Nach Regeneration des zweiten optischen Signals os2 wird es über eine weitere optische Zuleitungsfaser ZF zur Überwachungseinrichtung UE übertragen. In der Überwachungseinrichtung UE wird das zweite optische Signal os2 für die Übertragung über die erste und die zweite optische Faser OF1, OF2 vorbereitet und zusätzlich der Betriebszustand der ersten optischen Zuleitungsfaser ZF1 überwacht. Des Weiteren wird die der ersten dezentralen optischen Einrichtung DZ1 zugeordnete Datenrate in der Überwachungseinrichtung UE überwacht. Das zweite optische Signal osz2 wird aktiv über die erste optische Faser OF1 in erster Übertragungsrichtung UER1 und redundant über die zweite optische Faser OF2 in zweiter Übertragungsrichtung UER2 von der Überwachungseinrichtung UE des ersten optischen Netzknoten ZE1 zum vierten bzw. zweiten optischen Netzknoten ZE4, ZE2 übertragen.

Zusätzlich ist in Figur 2 eine weitere Ausgestaltung des erfindungsgemäßen Kommunikationsnetzes OKN durch die Ergänzung des Anschlusses der zweiten dezentralen Einrichtung DZ2 an den ersten optischen Netzknoten ZE1 mit einer 1+1 Leitungsschutzschaltung dargestellt. Ein über die siebte und achte optische Faser OF7, OF8 zum ersten optischen Netzknoten ZE1 annäherend gleichzeitig übertragenes, drittes optisches Signal os3 wird im ersten optischen Netzknoten ZE1 an die Überwachungseinrichtung UE geführt. In der Überwachungseinrichtung UE erfolgt eine Überprüfung des Betriebszustands der siebten und achten optischen Fasern OF7, OF8 und eine Kontrolle der für die Übertragung zur zweiten dezentralen Einrichtung DZ2 benutzten Datenrate. Im Gegensatz zum oben beschrieben Anschluß der ersten dezentralen Einrichtung DZ1 an den ersten optischen Netzknoten ZE1 wird in der Überwachungseinrichtung das über die siebte optische Faser OF7 übertragene dritte optische Signal os3 an die fünfte optische Zuleitungsfaser ZF5 geführt und über diese zur zweiten, dezentralen optischen Einrichtung DZ2 übertragen. Analog dazu wird das über die achte optische Faser OF8 übertragene dritte optische Signal os3 über die Überwachungseinrichtung UE an die sechste optische Zuleitungsfaser ZF6 geführt und über diese zur zweiten, dezentralen optischen Einrichtung DZ2 übertragen. In der zweiten, dezentralen optischen Einrichtung DZ2 werden sowohl das über die fünfte als auch das über die sechste optische Zuleitungsfaser übertragene dritte optische Signal os3 in der zweiten optischen Empfangseinheit EE2 empfangen und in der zweiten, dezentralen optischen Einrichtung DZ2 weiterverarbeitet.

Das von der zweiten Sendeeinrichtung SE2 in der zweiten, dezentralen optischen Einrichtung DZ2 erzeugte vierte optische Signal os4 wird sowohl über die dritte als auch über die vierte optische Zuleitungsfaser ZF3, ZF4 annähernd gleichzeitig an den ersten optischen Netzknoten ZE1 übertragen und im ersten optischen Netzknoten ZE1 an die Überwachungseinrichtung UE geführt. In der Überwachungseinrichtung UE wird wiederum der Betriebszustand der dritten und vierten optischen Zuleitungsfasern ZF3, ZF4 und die Datenrate der zwischen der zweiten dezentralen Einrichtung DZ2 und dem optischen Netzknoten ZE2 aktuell übertragenen Daten überwacht. Anschließend wird das über die dritte, optische Zuleitungsfaser ZF3 zur Überwachungseinrichtung übertragene, vierte optische Signal os4 über die fünfte, optische Faser OF5 von der Überwachungseinrichtung UE des ersten optischen Netzknotens ZE1 zum vierten optischen Netzknoten ZE4 in erster Übertragungsrichtung UER1 aktiv übertragen. Analog dazu wird das über die vierte, optische Zuleitungsfaser ZF4 zur Überwachungseinrichtung redundant übertragene, vierte optische Signal os4 über die sechste, optische Faser OF6 von der Überwachungseinrichtung des ersten optischen Netzknotens ZE1 zum zweiten, optischen Netzknoten ZE2 in zweiter Übertragungsrichtung UER2 redundant übertragen.

## Patentansprüche

1. Transparentes faseroptisches Kommunikationsnetz (OKN) mit mehreren über optische Fasern (OF) miteinander verbundenen zentralen Einrichtungen (ZE1,...,ZE4), an die jeweils über zwei optische Zuleitungsfasern (ZF) zumindest eine dezentrale Einrichtung (DZ1,...,DZ7) angeschlossen ist,
**dadurch gekennzeichnet,**
- **daß** eine erste optische Faser (OF1) über eine Überwachungseinrichtung (UE) optisch transparent durch eine erste optische Zuleitungsfaser (ZF1) mit einer der dezentralen optischen Einrichtungen (DZ1) verbunden ist und
- **daß** eine zweite optische Faser (OF3) über die Überwachungseinrichtung (UE) optisch transparent durch eine zweite optische Zuleitungsfaser (ZF2) mit der einen dezentralen optischen Einrichtung (DZ1) verbunden ist.

2. Transparentes faseroptisches Kommunikationsnetz nach Anspruch 1,
**dadurch gekennzeichnet,**
- **daß** die erste optische Faser (OF1) zusätzlich zur Überwachungseinrichtung (UE) über eine Regenerationseinrichtung (RE) optisch transparent durch die erste optische Zuleitungsfaser (ZF1) mit der dezentralen optischen Einrichtungen (DZ1) verbunden ist und
- **daß** die zweite optische Faser (OF3) zusätzlich zur Überwachungseinrichtung (UE) durch eine Regenerationseinrichtung (RE) optisch transparent über die zweite Zuleitungsfaser (ZF2) mit der einen dezentralen Einrichtung (DZ1) verbunden ist.

3. Transparentes faseroptisches Kommunikationsnetz nach den Ansprüchen 1 und 2,
**dadurch gekennzeichnet,**
**daß** die Überwachungseinrichtung (UE) zur Überwachung des Betriebszustands der optischen Zuleitungsfasern (ZF1,...,ZF6) und/oder der optischen Fasern (OF1,...,OF10) vorgesehen ist.

4. Transparentes faseroptisches Kommunikationsnetz nach einem der Ansprüche 1 bis 3,
**dadurch gekennzeichnet,**
**daß** die Überwachungseinrichtung (UE) zur Überwachung der Datenrate der zwischen der dezentralen und der zentralen optischen Einrichtung (ZE1, DZ1) aktuell übertragenen Daten vorgesehen ist.

5. Transparentes faseroptisches Kommunikationsnetz nach Anspruch 2,
**dadurch gekennzeichnet,**
**daß** die Regenerationseinrichtung (RE) zur Wiederherstellung des ursprünglichen Sendepegels der über die optischen Zuleitungsfasern (ZF1,...,ZF6) und/oder über die optischen Fasern (OF1,...,OF10) übertragenen optischen Signale (os) vorgesehen ist.

6. Transparentes faseroptisches Kommunikationsnetz nach einem der Ansprüche 1 bis 5,
**dadurch gekennzeichnet,**
**daß** zumindest eine der optischen Zuleitungsfasern (ZF3) in einem aktiven Betriebsmodus und zumindest eine weitere der optischen Zuleitungsfasern (ZF6) in einem redundanten Betriebsmodus betreibbar sind.

7. Transparentes faseroptisches Kommunikationsnetz nach einem der Ansprüche 1 bis 6,
**dadurch gekennzeichnet,**
**daß** zumindest eine der optischen Fasern (OF1) in einem aktiven Betriebsmodus und zumindest eine weitere der optischen Fasern (OF2) in einem redundanten Betriebsmodus betreibbar sind.

8. Transparentes faseroptisches Kommunikationsnetz nach einem der Ansprüche 1 bis 7,
**dadurch gekennzeichnet,**
**daß** die optischen Fasern (OF1,...,OF10) und/oder die optischen Zuleitungsfasern (ZF1,...,ZF6) in einem unidirektionalen Modus betrieben werden.

9. Transparentes faseroptisches Kommunikationsnetz nach einem der Ansprüche 1 bis 8,
**dadurch gekennzeichnet,**
**daß** das transparente, faseroptische Kommunikationsnetz (OKN) als Ring-Kommunikationsnetz (OKN) realisiert ist, wobei die zu übertragenden Daten über die in einem aktiven Betriebsmodus betriebenen optischen Fasern (OF1,OF5) in einer ersten Übertragungsrichtung (UER1) und über die in einem redundanten Betriebsmodus betriebenen optischen Fasern (OF2,OF6) in einer zweiten, entgegengesetzt zur ersten Übertragungsrichtung (UER2) übertragen werden.

## Claims

1. Transparent fiber optic communication network (OKN) with a number of central devices (ZE1,...,ZE4), connected to each other over optical fibers (OF) to which at least one decentralized device (DZ1,...,DZ7) is connected via two optical feeder fibers (ZF) in each case,
**characterized in that**,
- a first optical fiber (OF1) is connected via a supervision unit (UE) optically transparently by a first optical feeder fiber (ZF1) to one of the decentralized optical devices (DZ1) and
- a second optical fiber (OF3) is connected optically transparently via the supervision unit (UE) through a second optical feeder fiber (ZF2) with the one decentralized optical device (DZ1).

2. Transparent fiber optic communication network in accordance with Claim 1,
**characterized in that**,
- the first optical fiber (OF1) is additionally connected optically transparently to the supervision unit (UE) via a regeneration unit (RE) through the first optical feeder fiber (ZF1) to the decentralized optical devices (DZ1) and
- that the second optical fiber (OF3) in addition to the supervision unit (UE), is connected optically transparently through a regeneration unit (RE) via the second feeder fiber (ZF2) with the one decentralized device (DZ1).

3. Transparent fiber optic communication network according to one of the Claims 1 and 2,
**characterized in that**,
the supervision unit (UE) is provided for monitoring the operating state of the optical feeder fibers (ZF1,...,ZF6) and/or the optical fibers (OF1,...,OF10).

4. Transparent fiber optic communication network according to one of the Claims 1 to 3,
**characterized in that**,
the supervision unit (UE) is provided for monitoring the data rate of the data currently being transmitted between the decentralized and the central optical devices (ZE1, DZ1).

5. Transparent fiber optic communication network in accordance with Claim 2,
**characterized in that**,
the regeneration unit (RE) is provided for restoring the original transmit level of the optical signals (os) transmitted over the optical feeder fibers (ZF1,...,ZF6) and/or over the optical fibers (OF1,...,OF10).

6. Transparent fiber optic communication network in accordance with one of the Claims 1 to 5,
**characterized in that**,
at least one of the optical feeder fibers (ZF3) can be operated in an active operating mode and at least other of the optical feeder fibers (ZF6) can be operated in a redundant operating mode.

7. Transparent fiber optic communication network in accordance with one of the Claims 1 to 6,
**characterized in that**,
at least one of the optical fibers (OF1) can be operated in an active operating mode and at least one other of the optical fibers (OF2) can be operated in a redundant operating mode.

8. Transparent fiber optic communication network in accordance with one of the Claims 1 to 7,
**characterized in that**,
the optical fibers (OF1,...,OF10) and/or the optical feeder fibers (ZF1,...,ZF6) are operated in a unidirectional mode.

9. Transparent fiber optic communication network in accordance with one of the Claims 1 to 8,
**characterized in that**,
the transparent, fiber optic communication network (OKN) is implemented as a ring communication network (OKN), with the data to be transmitted being transmitted over the optical fibers operated in an active operating mode (OF1,OF5) in a first direction of transmission (UER1) and being transmitted over the optical fibers (OF2,OF6) operated in a redundant operating mode, in a second direction of transmission (UER2) opposite to the first one.

## Revendications

1. Réseau de communication à fibre optique transparent (OKN) comprenant plusieurs dispositifs (ZE1, ..., ZE4), centralisés, reliés entre eux par des fibres optiques (OF), auxquelles est raccordé au moins un dispositif (DZ1, ..., DZ7) décentralisé respectivement par deux fibres optiques d'arrivée (ZF),
**caractérisé en ce**
- **qu'**une première fibre optique (OF1) est reliée de façon optiquement transparente via un dispositif de surveillance (UE) par une première fibre optique d'arrivée (ZF1) à l'un des dispositifs optiques (DZ1) décentralisés et
- une seconde fibre optique (OF3) est reliée de façon optiquement transparente via le dispositif de surveillance (UE) par une seconde fibre optique d'arrivée (ZF2) à un dispositif optique (DZ1) décentralisé.

2. Réseau de communication à fibre optique transparent selon la revendication 1,
**caractérisé en ce**
- **que** la première fibre optique (OF1) est reliée en supplément du dispositif de surveillance (UE) via un dispositif de régénération (RE), de façon optiquement transparente, par la première fibre optique d'arrivée (ZF1) au dispositif optique (DZ1) décentralisé et
- la seconde fibre optique (OF3) est reliée en supplément du dispositif de surveillance (UE) par un dispositif de régénération (RE), de façon optiquement transparente, via la seconde fibre optique d'arrivée (ZF2) à un dispositif décentralisé (DZ1).

3. Réseau de communication à fibre optique transparent selon la revendication 1 ou 2,
**caractérisé en ce**
**que** le dispositif de surveillance (UE) est prévu pour la surveillance de l'état de service des fibres optiques d'arrivée (ZF1, ..., ZF6) et/ou des fibres optiques (OF1, ..., OF10).

4. Réseau de communication à fibre optique transparent selon l'une quelconque des revendications 1 à 3,
**caractérisé en ce**
**que** le dispositif de surveillance (UE) est prévu pour la surveillance du débit des données transmises de façon actuelle entre le dispositif optique décentralisé et le dispositif optique centralisé (ZE1, DZ1).

5. Réseau de communication à fibre optique transparent selon la revendication 2,
**caractérisé en ce**
**que** le dispositif de régénération (RE) est prévu pour le rétablissement du niveau d'émission initial des signaux optiques (os) transmis via les fibres optiques d'arrivée (ZF1, ..., ZF6) et/ou via les fibres optiques (OF1, ..., OF10).

6. Réseau de communication à fibre optique transparent selon l'une quelconque des revendications 1 à 5,
**caractérisé en ce**
**que** au moins l'une des fibres optiques d'arrivée (ZF3) peut être exploitée dans un mode de service actif et au moins une autre des fibres optiques d'arrivée (ZF6) peut être exploitée dans un mode de service redondant.

7. Réseau de communication à fibre optique transparent selon l'une quelconque des revendications 1 à 6,
**caractérisé en ce**
**que** au moins l'une des fibres optiques (OF1) peut être exploitée dans un mode de service actif et au moins une autre des fibres optiques (OF2) peut être exploitée dans un mode de service redondant.

8. Réseau de communication à fibre optique transparent selon l'une quelconque des revendications 1 à 7,
**caractérisé en ce**
**que** les fibres optiques (OF1, ..., OF10) et/ou les fibres optiques d'arrivée (ZF1, ..., ZF6) sont exploitées dans un mode unidirectionnel.

9. Réseau de communication à fibre optique transparent selon l'une quelconque des revendications 1 à 8,
**caractérisé en ce**
**que** le réseau de communication transparent à fibre optique (OKN) est réalisé sous la forme d'un réseau de communication en boucle (OKN), les données à transmettre étant transmises via les fibres optiques (OF1, OF5) exploitées dans un mode de service actif dans une première direction de transmission (UER1) et via les fibres optiques (OF2, OF6), exploitées dans un mode de service redondant dans une seconde direction de transmission (UER2) opposée à la première.
